# EUROPEAN PATENT SPECIFICATION

(11) **EP 2 463 243 B1**
(45) Date of publication and mention of the grant of the patent: **02.12.2015**
(21) Application number: 11009647.6
(22) Date of filing: 07.12.2011
(51) Int. Cl.: C02F 3/20, B01F 3/04

(54) **A MEMBRANE OF AN AERATOR**
MEMBRAN EINES DURCHLÜFTERS
MEMBRANE D'UN AÉRATEUR

(30) Priority: 07.12.2010 RU 2010150185
(43) Date of publication of application: 13.06.2012
(73) Proprietor: Nauchno-proizvodstvennaya firma s ogranichennoy otvetstvennostyu, 61072 Kharkov (UA)
(72) Inventor: Meshengisser, Yuriy M., 61024 Kharkov (UA); Kolesnik, Yuriy V., 61136 Kharkov (UA); Smirnov, Nikolay S., 61174 Kharkov (UA)
(74) Representative: Jeck, Anton

(56) References cited:
- EP-A2- 0 704 237
- DE-C1- 3 632 772
- DE-U1- 9 318 676

## Description

This improvement relates to biological treatment of wastewater, in particular to an apparatus for pneumatic aeration, and may be used in aeration tanks of treatment plants for biological treatment of wastewater and in the fisheries waters intended for the artificial cultivation of fish.

It is known a device including a membrane of an aerator (see Membrane Disc. SAN-ITAIRE Aeration Systems, http://www.sanitaire.com).

The known membrane of the aerator operates only by its upper part. A stagnant zone with accumulation of active sludge precipitating onto the bottom is created under the aerator on the bottom of the aeration tank. Just increasing the air flow through the aerator does not help in deleting the stagnant zones under the aerator. Moreover stretching of the perforated dispersing surface of the elastic membrane because of higher pneumatic loading results in increasing the opening degree of the membrane holes and as a consequence, in passing excessive rate of compressed air through the membrane with enlargement of air bubbles above the membrane.

It is known a membrane of an aerator, for example see patent documents of the Russian Federation RU 2 220 917 A of 10.01.2004, RU 2 334 686 A of 27.09.2008 and RU 2 334 688 A of 27.09.2008), containing an annular elastic membrane with a central hole.

While operating of the known membrane of the aerator, reduced pressure in the water-air flow above the central opening, into which water enters from the aerator, is created and captures a sludge precipitated in the water-air flow during aeration of wastewater into the water-air flow. Because of reduced pressure in the water flow above the central hole, which is formed via surrounding the central hole by a water-air ring, a narrowing of the water-air flow from the periphery of the annular elastic membrane takes place.

From the German utility patent document DE 9 318 676 U1 an aerator of elastic material designed like a hose ring with a gas passage opening is known.

From the European laid open patent application document EP 0 704 237 A2 a device for gasifying liquids comprising a flat annular membrane is known.

The German patent document DE 36 32 772 C1 discloses an aerator comprising an annular elastic membrane with a central hole which diameter is above the width of the annular membrane ring.

In the known devices water comes into the water-air flow from the outer and inner side surfaces of the annular membrane only what results in that the annular membrane does not provide sufficient aeration of the water and oxygen mass transfer in the water-air flow above it.

The object set as the basis of the invention is to provide a membrane of an aerator in which said disadvantages are eliminated and aeration of water and efficiency of oxygen mass transfer are improved by specific design of the membrane.

The object set is achieved by providing a membrane of an aerator including an annular elastic membrane with a central hole whereby the diameter of the central hole is above or equal to the width of the ring of the annular membrane. According to the invention the annular elastic membrane is characterized in that the membrane of the aerator comprises alternating perforated areas and non-perforated areas along the ring.

Advantageously improvements of the invented membrane of an aerator are presented in depending claims.

The membrane of the aerator comprises at least four perforated and four non-perforated areas.

The membrane of the aerator comprises the non-perforated areas of greater thickness than the perforated areas, the non-perforated areas extending outwards of the annular elastic membrane and the non-perforated areas running from the outer side surface up to the inner side surface of the annular elastic membrane.

Technical effect is in that providing the diameter of the central hole being above or equal to the width of the annular membrane ring and that the membrane comprises alternating perforated areas and non-perforated areas along the ring, a larger quantity of water has access to the central hole from below and lesser the water-air flow narrowing from the periphery of the annular elastic membrane above the annular elastic membrane takes place.

Due to alternating of the perforated and non-perforated areas along the ring, water comes into the water-air flow from the annular membrane not only from the outer and inner side surfaces of the annular membrane, but also from the areas between the perforated areas, what improves the aeration of the water and mass transfer in the water-air flow above the annular membrane.

In case the annular membrane of the aerator includes at least four perforated areas and four non-perforated areas, aeration of water and mass transfer in the water-air flow above the annular membrane are improved.

In case the membrane of the aerator includes the non-perforated areas of greater thickness than the perforated areas, while using the membrane the said non-perforated areas have lesser elasticity and they are less swelled under the pressure of the compressed air, than the perforated areas with lesser thickness. In this case the influence of hydrostatic water pressure takes place, which is higher by a few millimeters of water column above the non-perforated areas than above the perforated areas of smaller thickness inflated by compressed air pressure, what facilitates the access of water to the water-air flow between the perforated areas along the ring of the membrane.

The non-perforated areas extend outwards of the annular elastic membrane, since the inner side of the membrane is made smooth for a tight abutment to corresponding smooth surface in the housing of the aerator in case of turning off the compressed air supply into the aerator. In this case being under hydrostatic pressure (it depends on the depth of the aeration tank and immersion depth of the aerator and can reach several meters of water column) the smooth surfaces of the housing and of the membrane function as a back valve, prevents water access from the aeration tank to the aerator.

The non-perforated areas run from the outer side surface up to the inner side surface of the annular elastic membrane because the membrane is pressed against the housing by its outer and inner side surfaces, what is important for direct feeding of the compressed air to the perforated areas from which this compressed air is dispersed through the perforations into the water with the water-air flow formation therein.

The improvement is explained by an example and drawings presented below, name-ly:
- Fig. 1,: which shows a top view of a membrane of the aerator,
- Fig. 2,: which shows a cross-section along line A-A of the membrane of the aerator according to Fig. 1,
- Fig. 3,: which shows a top view of an alternative embodiment of the membrane of the aerator,
- Fig. 4,: which shows a cross-section along line B-B of the membrane of the aerator according Fig. 3,
- Fig. 5,: which shows a view in direction B of the membrane of the aerator according to Fig. 2 and Fig. 4,
- Fig. 6,: which shows a schematic side view of the evolvent along the membrane ring midline while operating in water (alternative embodiment),
- Fig. 7,: which shows a schematic side view of the diametral cross-section of the aerator while operating in water and
- Fig. 8,: which shows a schematic side view of a diametrical cross-section of the membrane together with the housing in case of non-supplying compressed air to the aerator.

The list of the reference on the figures:
1. Annular elastic membrane.
2. Central hole.
3. Perforated area
4. Non-perforated area
5. Outer side surface.
6. Inner side surface.
7. Housing of the aerator.
8. Lock joint elements for joining with the housing of the aerator.
9. Water-air flow.
10. Water flow above the central hole 2.
11. The water flow above the non-perforated area of the membrane 1.

δ - Width of the annular membrane ring.
d - Diameter of the central hole.
D - Diameter of the annular membrane.
T - Width of the perforated area.
H - Width of the non-perforated area.

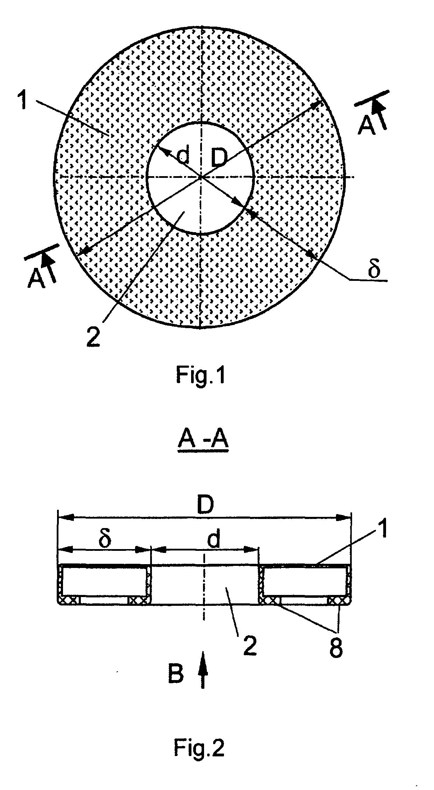

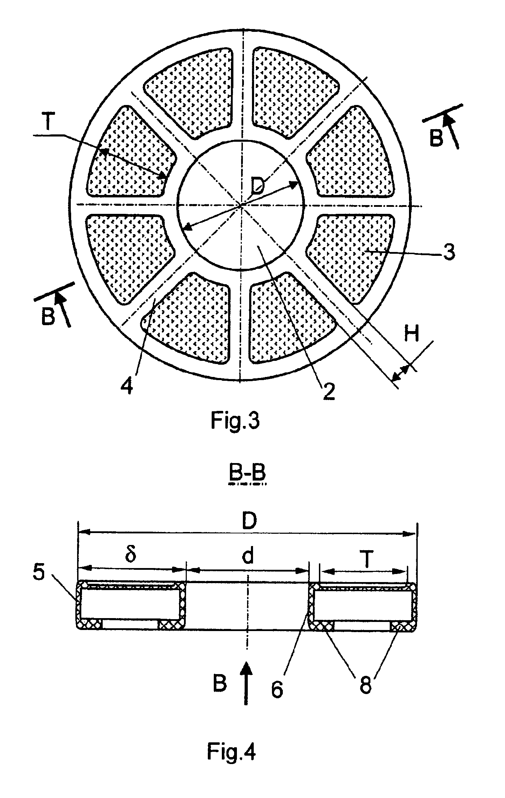

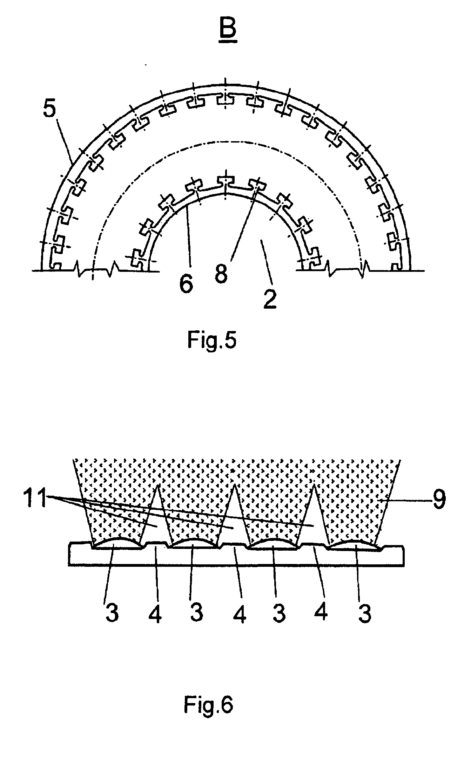

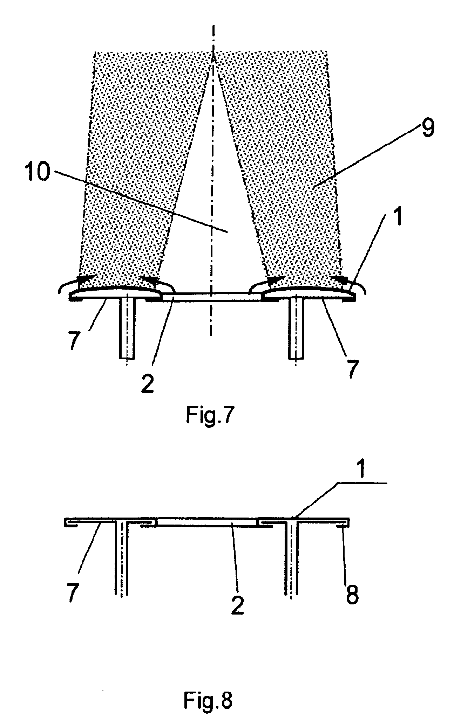

Specific examples of the aerator membrane embodiments are shown in Figs. 1 - 8. The device comprises an annular elastic membrane 1 with a central hole 2 which the diameter d of the central hole is above or equal to the width δ of the annular membrane ring. The membrane of the aerator includes a sequence of the perforated areas 3 and non-perforated areas 4 alternating along the ring. The membrane of the aerator includes at least four perforated areas 3 and four non-perforated areas 4. The membrane of the aerator includes the non-perforated areas 4 being thicker than the perforated areas 3, wherein the non-perforated areas 4 extend outwards from the annular elastic membrane 1 and the non-perforated areas 4 run from the outer side surface 5 up to the inner side surface 6 of the annular elastic membrane 1. The inner side of the membrane is made smooth for a tight abutment to corresponding smooth surface in the housing 7 of the aerator. The membrane 1 of the aerator is pressed against the housing 7 along the outer and inner side surfaces 5, 6 and is attached to the housing 7 of the aerator by means of the lock joint elements 8.

The width H of the ring part of the non-perforated areas 4 between adjacent perforated areas 3 may be from 10 to 40 mm. The width T of the ring part in the diametral plane of the perforated areas 3 may be from 50 to 150 mm.

The device operates as follows.

In case the diameter d of the central hole 2 is above or equal to the width δ of the ring of the annular membrane 1, a large quantity of water has access to the central hole 2 from below and lesser narrowing restriction of the water-air flow 9 from the periphery of the annular elastic membrane 1 takes place. Due to sequentially alternating of the perforated 3 and non-perforated 4 areas along the ring, water comes to the water-air flow 9 not only from the annular membrane 1, outer side surfaces 5 and inner side surfaces 6 of the annular membrane 1, but also from the areas between the perforated areas 3, what improves water aeration and mass transfer in the water-air flow 9 above the annular membrane 1.

Availability of at least four perforated areas 3 and four non-perforated areas 4 in the annular membrane 1 of the aerator improves water aeration and mass transfer in the water-air flow 9 above the annular membrane 1. Greater thickness of the non-perforated areas 4 of the annular membrane 1 of aerator in comparison with the perforated areas 3 results in that the membrane 1 the non-perforated areas 4 of greater thickness have lesser elasticity while membrane operating and they are less swelled due to the influence of the compressed air pressure than the perforated areas 3 with lesser thickness. In this case the influence of hydrostatic pressure of water, which above the non-perforated parts is higher by a few millimeters of water column than above the perforated areas of smaller thickness inflated by air pressure, takes place, what facilitates the access of water into the water-flow between the perforated areas along the ring of the membrane 1. The non-perforated areas 4 extend outwards of the annular elastic membrane 1, since the inner side of the membrane 1 is made smooth for a tight abutment to corresponding smooth surface in the housing 7 of the aerator in case of turning off the compressed air supply into the aerator. In this case the smooth surfaces of the housing 7 and of the membranes 1 function under hydrostatic pressure as a back valve, which prevents access of the water from the aeration tank to the aerator. The non-perforated areas 4 run from the outer side surface 5 up to the inner side surface 6 of the annular elastic membrane 1 because the membrane 1 is pressed against the housing 7 along the outer and inner side surfaces 5, 6, what is important for sealing and direct supply of the compressed air to the perforated areas 3 wherefrom this compressed air is dispersed into the water through the perforations with formation of water-air flow 9 therein.

## Claims

1. A membrane of an aerator including an annular elastic membrane (1) with a central hole (2), whereby the diameter (d) of the central hole (2) is above or equal to the width (δ) of the ring of the annular elastic membrane (2) **characterized in that** it includes sequentially alternating perforated areas (3) and non-perforated areas (4).

2. The membrane of the aerator according to claim 1, **characterized in that** it includes at least four perforated areas (3) and four non-perforated (4) areas.

3. The membrane of the aerator according to claim 1, **characterized in that** it includes the non-perforated areas (3) which are thicker than the perforated areas (3), wherein the non-perforated areas (4) extend outwards of the annular elastic membrane (1) and the non-perforated areas (4) run from the outer side surface (5) up to the inner side surface (6) of the annular elastic membrane (1).

## Patentansprüche

1. Membran eines Belüfters, die eine ringförmige elastische Membran (1) mit einem zentralen Loch (2) enthält, wobei der Durchmesser (d) des zentralen Lochs (2) größer gleich der Breite (δ) des Rings der ringförmigen elastischen Membran (2) ist, **dadurch gekennzeichnet, dass** sie sequentiell abwechselnde perforierte Bereiche (3) und nicht-perforierte Bereiche (4) enthält.

2. Membran des Belüfters nach Anspruch 1, **dadurch gekennzeichnet, dass** sie zumindest vier perforierte Bereiche (3) und vier nicht-perforierte Bereiche (4) enthält.

3. Membran des Belüfters nach Anspruch 1, **dadurch gekennzeichnet, dass** sie die nicht-perforierten Bereiche (3) enthält, die dicker als die perforierten Bereiche (3) sind, wobei sich die nicht-perforierten Bereiche (4) nach außerhalb der ringförmigen elastischen Membran (1) erstrecken und die nicht-perforierten Bereiche (4) von der Außenseitenfläche (5) bis zur Innenseitenfläche (6) der ringförmigen elastischen Membran (1) verlaufen.

## Revendications

1. Membrane d'un aérateur comprenant une membrane élastique annulaire (1) avec un trou central (2), moyennant quoi le diamètre (d) du trou central (2) est supérieur ou égal à la largeur (δ) de l'anneau de la membrane élastique annulaire (2), **caractérisée en ce qu'**elle comprend, en séquence, des zones perforées (3) et des zones non perforées (4) alternées.

2. Membrane de l'aérateur selon la revendication 1, **caractérisée en ce qu'**elle comprend au moins quatre zones perforées (3) et quatre zones non perforées (4).

3. Membrane de l'aérateur selon la revendication 1, **caractérisée en ce qu'**elle comprend des zones non perforées (4) qui sont plus épaisses que les zones perforées (3), dans laquelle les zones non perforées (4) s'étendent vers l'extérieur de la membrane élastique annulaire (1) et les zones non perforées (4) s'étendent à partir de la surface latérale externe (5) jusqu'à la surface latérale interne (6) de la membrane élastique annulaire (1).
